# EUROPEAN PATENT SPECIFICATION

(11) **EP 0 969 741 B1**
(45) Date of publication and mention of the grant of the patent: **16.10.2002**
(21) Application number: 97908272.4
(22) Date of filing: 18.03.1997
(51) Int. Cl.: A23L 1/212, A23L 1/06

(54) **PROCESS FOR THE PREPARATION OF A FOOD PRODUCT**
VERFAHREN ZUR HERSTELLUNG EINES NAHRUNGSMITTEL
PROCEDE DE PREPARATION D'UN PRODUIT ALIMENTAIRE

(30) Priority: 12.04.1996 EP 96302597
(43) Date of publication of application: 12.01.2000
(73) Proprietor: UNILEVER PLC, London EC4P 4BQ (GB); UNILEVER N.V., 3013 AL Rotterdam (NL)
(72) Inventor: BARRACLOUGH, Anthony, John, Northamptonshire NN8 1LW (GB); CLARK, Elsie, Mary, Bedford MK40 4LS (GB); GIDLEY, Michael, John, Northamptonshire NN9 6SZ (GB); GOTHARD, Michelle, Gina, Elizabeth, Sharnbrook Bedfordshire MK44 1JA (GB); THOMPSON, Eric, William, Northamptonshire NN10 0SY (GB); WHITEMAN, Sally-Anne, Bedford MK41 9LQ (GB); WOOLNER, Elizabeth, Mary, Bedford MK42 0XA (GB)
(74) Representative: Wurfbain, Gilles L.
(86) International application number: EP9701401
(87) International publication number: WO97038592

(56) References cited:
- EP-A- 0 123 345
- WO-A-94/12055
- WO-A-96/11588
- US-A- 5 436 022
- JOURNAL OF FOOD SCIENCE, vol. 36, no. 7, 1971, CHICAGO US, pages 1039-1043, XP002012708 B.S.LUH ET AL.: "Effect of break temperature and holding time on pectin and pectic enzymes in tomato pulp"

## Description

### Field of the Invention

The invention relates to a process for the preparation of tomato-based products of high quality and consistency and products obtained by this process.

### Background to the Invention

It is desirable to be able to produce tomato-based products having a high consistency and quality with a low tomato solids content. In order to do this, it is necessary to be able to substantially increase the viscosity of the tomato paste used to prepare such products, for example tomato-based sauces.

Enzymes such as pectin methylesterase (PME) are naturally present in immature and mature tomatoes. Upon breaking/cutting tomatoes, PME is released and catalyses the removal of methyl ester groups from pectin molecules naturally present in the tomato. Consequently, the pectin molecules can associate with each other via cation cross-links to form a gel-like structure. The cation may be Ca²⁺, either naturally present in the tomato, or added to the macerated tomato. A calcium-pectinate gel results. Mature (red) tomatoes also contain enzymes capable of depolymerising pectin, notably polygalacturonase (PG). Pectin depolymerisation can offset increases in gel-like structure caused by PME.

EP-A-0123345 relates to methods for minimising flavour loss and controlling the consistency of tomato products containing one or more members of the Allium botanical genus, when processed primarily at temperatures below those commonly used. Gel formation is regulated (ie. promoted or prevented) by: pre-treatment of the allium; or heating the tomato product to a specific temperature prior to allium addition; or depolymerising the tomato pectin prior to allium addition.

A paper by Castaldo et al in INDUSTRIA CONSERVE, 70, 1995 entitled 'Preparation of high-consistency vegetable products: tomato pulps (Part II)' discusses increasing the consistency of diced tomatoes by adding moderate amounts of pectin methylesterase (PME) to calcifying solutions. The addition of PME is proposed to increase the deesterification of pectic fractions on the surface of diced tomatoes, which produces new calcium binding sites to confer high rigidity to the product. The source of PME is red tomatoes; PG is present in PME extracts sourced from red tomatoes.

A PhD thesis by J.S. Jones from Purdue University, 1988 relates to 'Control of tomato juice consistency with pectin methyl-esterase, Ca²⁺ and Na⁺. Tomato product yield is increased by optimisation of Ca²⁺ and Na⁺ salt concentrations in the presence of highly deesterified pectin.

The formation of calcium-pectinate gels, or gels resulting from the addition of an allium group, can render a tomato product unacceptable to consumers.

The present invention seeks to provide an improved process for manipulating the consistency and the texture of tomato-based products having a low solids content. In particular, the formation of undesirable gels is minimised, whilst still achieving an increase in product consistency.

### Summary of the Invention

According to the present invention there is provided a process for providing a tomato-based product comprising the following steps:
a) adding an extract of pectin methylesterase to a hot break tomato paste;
b) incubating the hot break tomato paste with the pectin methylesterase;
c) inactivating the pectin methylesterase;
wherein step b) is carried out under conditions such that the tomato paste increases in consistency but does not substantially gel, with the proviso that the tomato paste is not subjected to a high pressure shear field.

Preferably, a tomato paste prepared in accordance with the present invention has a yield stress equivalent to less than 400 Pascals at 12° Brix, and preferably greater than 50 Pascals at 12° Brix. A yield stress equivalent to these values means a yield stress at 12° Brix, or a corresponding yield stress at another Brix value.

Preferably, a tomato paste prepared in accordance with the present invention has a G' value (storage modulus) equivalent to less than or equal to 3500 Pascals at 12° Brix, and preferably greater than 1500 Pascals. A G' value equivalent to these values means a G' value at 12° Brix, or a corresponding G' value at another Brix value.

In contrast to the prior art, a tomato product having a pulpy texture/appearance and an excellent consistency is obtained, with minimal formation of an undesirable gel. This is achieved by the controlled addition of PME, for example, by titrating a solution of PME extract into tomato paste or adding PME extract in the form of a powder. Using an extract of PME allows control of the amount of PME added, since it is assayable. Also, it is easily dosed. Hence, the level of PME activity in the tomato paste is easily pre-determined.

A tomato paste is, for example, chopped or diced tomatoes, comminuted or macerated tomatoes. It therefore includes tomato pieces having a size in the range of from approximately 10 µm to approximately 3cm.

Hot break tomato paste is a tomato paste which has been initially heated causing the inactivation of the naturally-present PME.

In the hot-break process, raw tomatoes are fed into a vessel provided with steam coils (or steam jackets) and a rotating blade assembly for agitating the material in the vessel, such that good heat transfer is obtained and the tomato may be comminuted. The hot-break process is typically conducted at a temperature greater than 80°C, preferably from 85 to 95°C.

A suitable source for PME is any vegetable or fruit from which it can be extracted. For example, green beans, snap beans, potatoes, cauliflowers, sour cherries, green tomatoes, green peppers, oranges, apples, bananas, pears, turnips, onions, garlic and mixtures thereof. Immature fruit and vegetables are preferred. Particularly preferred sources are green tomatoes, green peppers, green beans and snap beans.

The most preferred source of PME is green tomatoes, as they contain high levels of PME and insignificant (ie undetectable) levels of PG, and because their addition means that the paste is able to remain purely tomato-based, if desired (ie no non-tomato ingredient is used to effect thickening in accordance with the present invention.)

PME may be extracted from green tomatoes by stabilising green tomatoes or pieces thereof and extracting pectin methylesterase therefrom. The stabilised green tomatoes and pieces thereof are ambient stable and convenient to use. Preferably, the extract of PME is a solution or powder for practical and controlled dosing into hot break tomato paste.

There are various methods of stabilising PME-containing green tomatoes and pieces thereof, as well as extracts therefrom. These include: lyophilisation (freeze-drying) of tomatoes, pieces or soluble extract; freezing tomatoes, pieces or soluble extract; freezing soluble extract from freeze-thaw treated tomatoes or pieces; air drying tomatoes or pieces; and spray drying tomato macerate/slurry or soluble extract. The tomatoes or pieces thereof may be ground either before or after the stabilisation step.

In this connection, the inventors have discovered that salt extraction of PME from dried powders of green tomato pericarp yields levels of PME activity equivalent to those of fresh pericarp.

The PME extract is added to the hot break tomato paste, optionally with any other ingredients. The mixture is then incubated to activate the enzyme and allow firming to occur, but not to allow a gel to be substantially formed. In one example, the incubation is conducted at 50°C for 30 minutes with 265 units of PME per 100g of a tomato paste. Different tomato pastes take different lengths of time to respond to the same amount of PME activity at the same temperature of incubation. Once the desired consistency (thickness) has been achieved, the PME is inactivated by, for example, heating, adjusting pH, and/or adding inhibitors. If heating is used, the temperature is typically raised to 90°C for 10 minutes.

The tomato paste produced by this process can be sold as it is, or can be used as the ingredient of products, such as sauces, ketchup, pizza toppings and soups.

Examples of the products and processes of the invention will now be described to illustrate, but not to limit, the invention, with reference to the accompanying figures, in which:
figure 1 is a graph of units of PME activity (µmole COO⁻ /min) per 100g paste (x axis) against yield stress (Pa) (y axis);
figure 2 is a graph of time (mins) (x axis) against G'(Pa) (y axis) for a range of PATE activities at a constant incubation temperature; and
figure 3 is a graph of time (mins) (x axis) against G' (Pa) (y axis) for a range of temperatures at a constant level of PME activity.

### Detailed Description of the Invention

As evidenced by experiment 1 below, PME extracts having high levels of PME activity are prepared by extracting PME from green tomatoes under buffered or unbuffered conditions, and assaying at pH's of 6.4-7.5, and at temperatures of approximately 50°C.

### Experiment 1

Extracts from green tomatoes were made under buffered, pH 8, or unbuffered conditions. Unbuffered extracts were made by taking 200g of fresh or frozen green tomato pericarp and homogenising in 200ml cold distilled water in a household blender. The cell wall debris was separated by centrifugation (13,000g, 20 min, 4°C). The supernatant was poured off and the cell walls re-extracted in 200ml of 1M NaCl, by stirring at 4°C for 2-4 hours. Salt solubilised proteins were then separated by centrifugation as above, and aliquots of the supernatant were either stored at -20 or -70°C or used immediately. Buffered extracts were made in the same manner, except 0.05-0.2M sodium phosphate buffer - pH 8.0 was used at the first step and at the second step.

The extracts were assayed for PME activity at different temperatures and pH's. Results are shown in Table 1. Units of activity are expressed as µmoles COO⁻ generated/min/g fwt at the given pH and temperature.

**Table 1:**

| PME activity in extracts of green tomato pericarp | | | |
|---|---|---|---|
| Assay pH | Assay temperature | Buffered/unbuffered | PME activity |
| 3.3 | 30 | U | 0 |
| 3.3 | 30 | B | 0 |
| 6.4 | 30 | U | 91.7 |
| 6.4 | 30 | B | 100 |
| 7.5 | 30 | U | 106.3 |
| 7.5 | 30 | B | 125 |
| 3.3 | 50 | U | 0 |
| 6.4 | 50 | U | 175 |
| 6.4 | 50 | B | 200 |
| 7.5 | 50 | U | 225 |
| 7.5 | 50 | B | 275 |

The results show that PME is not active at pH 3.3 but shows high levels of activity at pH's 6.4 and 7.5. Activity is approximately doubled when the temperature is raised from 30 to 50°C. Extracting the enzyme under buffered conditions increases the activity by up to 20%. In all cases, no PG activity was detected.

High levels of PME activity are also achieved by salt extraction of PME from a freeze-dried powder of green tomato pericarp, as evidenced by Experiment 2 below.

### Experiment 2

Green tomato pericarp was frozen in liquid nitrogen and freeze dried to produce ambient stable powder. This powder was assayed for PME activity. A high salt extract of this powder was also assayed. Results shown in Table 2 have been converted to equivalent g fwt to allow direct comparison with data in Table 1.

**Table 2:**

| PME activity of lyophilized green tomato pericarp | | | |
|---|---|---|---|
| Sample | Assay pH | Assay Temp | PME activity |
| powder 2.2mg | 7.5 | 30 | 70.7 |
| powder 4.3mg | 7.5 | 30 | 98.9 |
| 2M salt extract | 7.5 | 30 | 111 |
| 2M salt extract | 7.5 | 50 | 222 |

The results show that the activity of lyophilized green pericarp is reduced by around 20% compared to extracts from fresh pericarp. It appears that salt extraction of the lyophilized powder yields equivalent levels of activity to fresh pericarp.

### Experiments 3-6

Standard commercial tomato pastes, diluted to 12° Brix, were used for experiments 3 to 6. Effects were measured by small deformation rheology (G' values), yield stress, Bostwick (paste flow due to gravity in 30 seconds) and serum:pellet ratio (separated by centrifugation).

Small deformation rheology: a small amount (approx 3g) of each paste was placed between parallel plates on a rheometer, model RDA2 available from Rheometrics, the plates being 5cm in diameter and roughened by attachment of emery paper to plate surfaces to reduce slippage or surface friction phenomena. A frequency sweep from 0.5-200 rads⁻¹ at 0.5% strain was taken at 20°C or 50°C. G' values were taken from the 10 rads⁻¹ measurement. Time sweep measurements were made at 0.5% strain, 10 rads⁻¹, at 50°C. All samples were sealed with liquid paraffin to avoid desiccation or water exchange.

Yield stress: a small amount (approx. 3g) of each paste was placed between parallel plates of a rheometer, model CSL500 available from Carrimed, the plates being 2000 µm apart, 4cm in diameter and roughened by the attachment of emery paper (as above). The samples were subjected to an oscillatory log amplitude ramp from 0.15 to 200 with a frequency of 1Hz at 25°C. Yield stress values (in Pa) were taken from the maximum point on a plot of % strain vs oscillatory stress.

Bostwick measurements were made in a standard Bostwick viscometer. Paste was placed in the levelled viscometer, the shutter opened and a timing clock started. The distance (in centimetres) over which the paste flowed in 30s was recorded.

Serum-pellet ratios were determined by placing a weighed amount of each paste into a centrifuge tube, centrifuging at 5,000-10,000xg for 30min, pouring off the serum, and recording the weights of the serum and pellet, so allowing a serum-pellet ratio to be calculated.

### Experiment 3

To investigate the effect of PME level on paste thickening, five PME extracts, each having a different level of PME activity (from 53 to 265 units of activity as measured at pH 7.5 and 30°C), were added to 100g samples of 12° Brix hot break paste. Another paste sample had no PME extract added and was used as a control. The samples were incubated overnight at room temperature. The yield stress of each sample was measured after incubation.

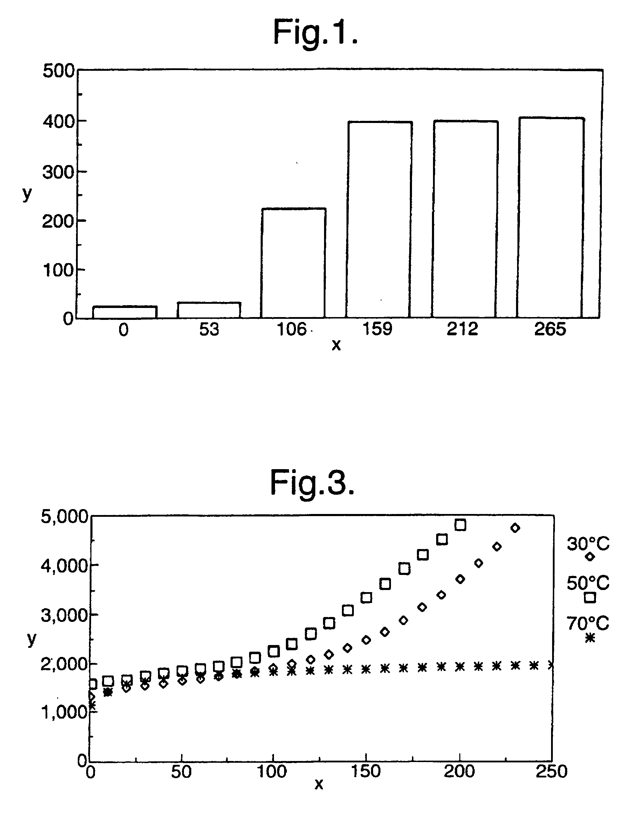

The yield stress results are shown in Figure 1. Increasing yield stress values indicate thicker pastes. At less than 53 units of PME activity there is no measurable effect on paste. At 159 units and above the paste forms a continuous gel. At 106 units there is a desirable increase in yield stress without gelling. This experiment illustrates that the texture (thickness) of tomato paste can be increased using PME in a controlled manner without the formation of a continuous gel structure.

### Experiment 4

To investigate the effects of PME level and incubation time on paste thickening, samples were set up as for Experiment 3. Increase in G' was followed at 50°C for up to 4 hours.

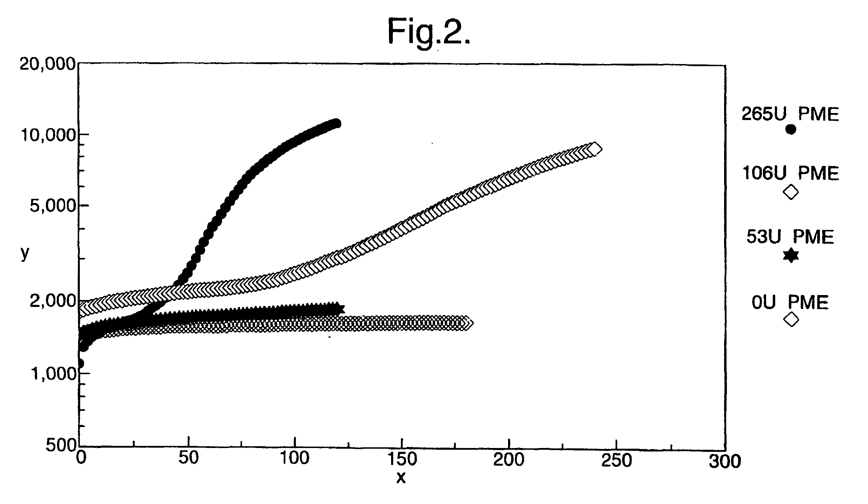

G' values (solid-like component) are obtained using small deformation rheology and increase with increasing paste thickness. The results are shown in Figure 2. Thickening is shown to be dependent on time and level of PME activity and to increase with longer incubation times and higher levels of PME activity.

### Experiment 5

To investigate thermal pasteurisation of PME-thickened pastes, sufficient PME extract was added to a hot break tomato paste to achieve an activity level of 265 units of PME activity per 100g of paste. Two samples of the mixture were incubated in a water bath at 50°C for 30 and 60 minutes respectively. Two non-PME-treated samples of the hot break paste were also incubated under these conditions, and were used as controls. A 1:1 blend was made from some of the 60 minute, PME-treated paste and the 60 minute control paste. Samples were then packed in foil pouches and thermally pasteurised to inactivate the PME. Results are shown in Table 3.

**Table 3:**

| Analysis of pasteurised PME treated pastes | | | | |
|---|---|---|---|---|
| Sample | G' | Gel Formed | Bostwick | Serum: pellet ratio |
| Control, 30 min | 1322 | No | 4.1 | 1.3 |
| Control, 60 min | 1411 | No | 3.7 | 1.2 |
| +PME, 30 min | 2258 | No | 1.8 | 0.8 |
| +PME, 60 min | 4028 | Yes | 0.5 | 0.9 |
| Blend | 1477 | No | 2.7 | 0.8 |

The results show that incubation with PME for 30 minutes led to a desirable, thickened paste. However, after 60 minutes the paste had formed an undesirable continuous gel. Blending of PME treated paste with an equal amount of untreated paste gave a product with improved Bostwick and serum-pellet ratio.

Experiment 5 therefore illustrates that the consistency of tomato paste can be controlled by blending PME-treated and non-PME treated pastes together.

### Experiment 6

To investigate the effects of shearing on paste during thickening with PME, sufficient PME extract was added to a hot break tomato paste to achieve an activity level of 265 units of PME activity per 100g of paste. A sample of the mixture was incubated at 50°C for 1 hour; shearing was carried out during the incubation period using a Rapid Visco Analyzer™ (RVA). Another sample of the mixture was incubated at 50°C for 1 hour, with no shearing. Two non-PME-treated samples of the hot break paste were also incubated under these conditions, one with shearing and one without shearing; they were used as controls. Results are shown in Table 4.

**Table 4:**

| Effect of shearing during PME structuring of paste | | |
|---|---|---|
| Sample | G'(Pa) | Gel formed |
| Control, not sheared | 1215 | No |
| Control, sheared | 1355 | No |
| +PME, not sheared | 3837 | Yes |
| +PME, sheared | 1984 | No |

The results show that shearing in the presence of PME reduces the G' such that gelling is prevented within this time scale.

### Experiment 7

This experiment illustrates the effects of temperature with time, and PME activity level with time, on PME-mediated thickening of hot break tomato paste, together with the conditions that are necessary to obtain final G' values of 2500 and 3500 Pa.

Three samples of a paste 1 were prepared by mixing 25g hot break paste and 23.75 ml water to give a smooth appearance without lumps. Two samples of a paste 2 were prepared in the same way, but using a hot break paste from another source.

To all samples of paste 1 and to one sample of paste 2, 1.25 ml of single step high salt green tomato pericarp extract (prepared in accordance with example 8 below) was added and stirred. This gave a dosage level of 265U PME activity per 100g of paste. To the remaining sample of paste 2, a sufficient volume of single step high salt green tomato pericarp extract was added to achieve a dosage level of 106U PME activity per 100g of paste.

The three samples of paste 1 were incubated for up co 250 minutes at temperatures of 30, 50 and 70 °C respectively.

Both samples of paste 2 were incubated at 50 °C for up to 250 minutes.

Over this time, G' values at 10 rads⁻¹ frequency were measured and plotted over time to follow the development of structuring within each paste.

To measure the G' value, a small amount of each paste was placed on a rheometer (model RDA2 available from Rheometrics) for small deformation rheology measurements. The paste was placed between parallel flat plates on the rheometer; the plates had been modified to have an edge retaining ring and were covered with emery paper to reduce slip. The rheometer was set up to operate at 0.5% strain, with a frequency of 10rads⁻¹, at 30°C, 50°C or 70°C.

The resulting G' values for the samples of paste 1 are shown in figure 3. A graph (not shown) was also plotted for the samples of paste 2. Using these graphs, the combinations of time, PME dosage and temperature required to obtain a particular G' value were ascertained. The following tables give examples of the combinations of parameters required to attain target G' values.

### 1. Final G' of 2,500 Pa

| Paste | Time (min) | Temp (°C) | Enzyme level (U PME activity per 100g paste mixture) |
|---|---|---|---|
| Paste 1 | 150 | 30 | 265 |
| Paste 1* | 110 | 50 | 265 |
| Paste 2 | 84 | 50 | 106 |
| Paste 2* | 48 | 50 | 265 |

### 2. Final G' of 3,500 Pa

| Paste | Time (min) | Temp (°C) | Enzyme level (U PME activity per 100g paste mixture) |
|---|---|---|---|
| Paste 1 | 190 | 30 | 265 |
| Paste 1* | 150 | 50 | 265 |
| Paste 2 | 136 | 50 | 106 |
| Paste 2* | 58 | 50 | 265 |

| | | | |
|---|---|---|---|
| *Although pastes 1 and 2 had the same level of PME activity and were incubated at the same temperature, different times were required to achieve the target G' value; this is because the hot break pastes were from different sources. | | | |

From a comparison of the results for the two samples of paste 2, it is seen that the greater the level of PME activity, the shorter the time of incubation required to achieve a certain paste consistency.

From the above experiments it is apparent that a tomato paste of increased consistency can be obtained at low temperature, without altering the level of tomato solids present, by the controlled addition of PME, and that a desirable pulpy/thick texture can thus be obtained, rather than an undesirable continuous gel structure.

### Experiment 8

This experiment illustrates several different methods for obtaining stable PME extracts from green tomatoes.

### Harvest and storage

Mature green tomatoes (with no sign of colour change) were harvested. The fruit were cut into quarters, the seeds and locular tissue removed and the pericarp frozen rapidly in liquid nitrogen. Pericarp pieces were then stored in plastic boxes at -20°C until required for use.

### 1. Preparation of single step high salt extracts

100g of frozen pericarp was taken and homogenised in a blender with 100ml of 2M sodium chloride. The slurry was stirred for 2 hours at 4°C, and then centrifuged at 12,000g for 30 minutes. The supernatant was collected by pouring through cheese cloth, and was then either used immediately or stored in small aliquots at -20°C. Each aliquot was thawed only once, any unused material being discarded.

### 2. Preparation of air dried powders

100g of frozen pericarp was ground to a fine powder in a household coffee grinder. The material was then spread out in a shallow dish and air dried under vacuum at ambient temperature. The dried material was stored in a sealed vessel at ambient temperature.

### 3. Preparation of freeze dried powder

100g of frozen pericarp was ground to a fine powder in a household coffee grinder. The material was transferred to a freeze drier flask, cooled again in a mixture of acetone and dry ice, and then freeze dried in a freeze drier. The dried material was stored in a sealed vessel at ambient temperature.

### Assay of samples for PME activity

Aliquots of the aqueous extracts and small quantities (a few milligrams) of the powders were used in the assays for PME. In each case records were kept of the amount of tissue used and the volume of salt extract or powder produced so that it was possible to convert the data into an activity per gram of frozen weight of pericarp.

PME activity was determined by titration with 0.025 M NaOH of a 1% pectin solution using an autotitrator.

The table below shows the PME activity of the samples after storage under the conditions specified.

| Extraction Method | Storage | PME activity (units/min/g frozen wt) |
|---|---|---|
| Single step high salt | -20°C, 3 days | 3.575 |
| Single step high salt | 4°C, 3 days | 3.196 |
| Single step high salt | -20°C, 6 months | 2.495 |
| Air dried | Ambient, 1 day | 2.567 |
| Freeze dried | Ambient, 1 day | 2.8 |
| Freeze dried | Ambient, 1 year | 2.6095 |

The samples showed a small decrease in PME activity after prolonged storage, but were relatively stable.

## Claims

1. A process for providing a tomato-based product comprising:
a) adding an extract of pectin methylesterase to a hot break tomato paste;
b) incubating the hot break tomato paste with the pectin methylesterase;
c) inactivating the pectin methylesterase;
wherein step b) is carried out under conditions such that the tomato paste increases in consistency but does not substantially gel,
with the proviso that the tomato paste is not subjected to a high pressure shear field.

2. A process as claimed in claim 1, wherein the pectin-methylesterase is inactivated when the incubated tomato paste has a yield stress equivalent to less than 400 Pascals at 12° Brix.

3. A process as claimed in claim 1 or claim 2, wherein the pectin methylesterase is inactivated when the incubated tomato paste has a yield stress equivalent to greater than 50 Pascals at 12° Brix.

4. A process as claimed in any preceding claim, wherein the pectin methylesterase is inactivated when the incubated tomato paste has a G' value equivalent to less than or equal to 3500 Pascals at 12° Brix.

5. A process as claimed in any preceding claim, wherein the pectin methylesterase is inactivated when the incubated tomato paste has a G' value equivalent to greater than 1500 Pascals at 12° Brix.

6. A process as claimed in any preceding claim, wherein the extract of pectin methylesterase is sourced from a vegetable, fruit or mixture thereof.

7. A process as claimed in claim 6, wherein the extract of pectin methylesterase is sourced from the group consisting of green beans, snap beans, potatoes, cauliflowers, sour cherries, green tomatoes, green peppers, oranges, apples, bananas, pears, turnips, onions, garlic and mixtures thereof.

8. A process as claimed in claim 7, wherein the extract of pectin methylesterase is sourced from green tomatoes.

9. A process as claimed in claim 8, wherein a green tomato or piece thereof is stabilised and pectin methylesterase is extracted therefrom.

10. A process as claimed in claim 9, wherein the green tomato or piece thereof is stabilised by freezing and/or drying.

11. A process as claimed in any preceding claim, wherein step b) further comprises shearing the tomato paste during its incubation with pectin methylesterase.

12. A process as claimed in any preceding claim, wherein non-PME-treated hot break tomato paste is added in between steps b) and c), or after step c).

## Patentansprüche

1. Verfahren zur Bereitstellung eines auf Tomaten basierenden Produkts, umfassend:
a) Zugeben eines Extrakts von Pectinmethylesterase zu einer heiß aufgeschlossenen Tomatenpaste;
b) Inkubieren der heiß aufgeschlossenen Tomatenpaste mit der Pectinmethylesterase;
c) Inaktivieren der Pectinmethylesterase;
wobei Schritt b) unter solchen Bedingungen ausgeführt wird, dass die Tomatenpaste sich in der Konsistenz erhöht, jedoch im Wesentlichen nicht geliert,
mit der Maßgabe, dass die Tomatenpaste keinem Hochdruck-Scherfeld ausgesetzt wird.

2. Verfahren nach Anspruch 1, wobei die Pectinmethylesterase inaktiviert wird, wenn die Tomatenpaste eine Fließgrenze äquivalent zu weniger als 400 Pascal bei 12° Brix aufweist.

3. Verfahren nach Anspruch 1 oder Anspruch 2, wobei die Pectinmethylesterase inaktiviert wird, wenn die inkubierte Tomatenpaste eine Fließgrenze äquivalent zu mehr als 50 Pascal bei 12° Brix aufweist.

4. Verfahren nach einem vorangehenden Anspruch, wobei die Pectinmethylesterase inaktiviert wird, wenn die inkubierte Tomatenpaste einen G'-Wert äquivalent zu weniger als oder gleich 3500 Pascal bei 12° Brix aufweist.

5. Verfahren nach einem vorangehenden Anspruch, wobei die Pectinmethylesterase inaktiviert wird, wenn die inkubierte Tomatenpaste einen G'-Wert äquivalent zu mehr als 1500 Pascal bei 12° Brix aufweist.

6. Verfahren nach einem vorangehenden Anspruch, wobei der Extrakt von Pectinmethylesterase von einem Gemüse, einem Obst oder einem Gemisch davon stammt.

7. Verfahren nach Anspruch 6, wobei der Extrakt von Pectinmethylesterase von der Gruppe, bestehend aus grünen Bohnen, Brechbohnen, Kartoffeln, Blumenkohl, Sauerkirschen, grünen Tomaten, grünem Pfeffer, Orangen, Äpfeln, Bananen, Birnen, weißen Rüben, Zwiebeln, Knoblauch und Gemischen davon, stammt.

8. Verfahren nach Anspruch 7, wobei der Extrakt von Pectinmethylesterase von grünen Tomaten stammt.

9. Verfahren nach Anspruch 8, wobei eine grüne Tomate oder ein Stück davon stabilisiert wird und Pectinmethylesterase daraus extrahiert wird.

10. Verfahren nach Anspruch 9, wobei die grüne Tomate oder das Stück davon durch Gefrieren und/oder Trocknen stabilisiert wird.

11. Verfahren nach einem vorangehenden Anspruch, wobei Schritt b) weiterhin Scherwirkung auf die Tomatenpaste während ihrer Inkubation mit Pectinmethylesterase umfasst.

12. Verfahren nach einem vorangehenden Anspruch, wobei nicht-PME-behandelte, heiß aufgeschlossene Tomatenpaste zwischen Schritten b) und c) oder nach Schritt c) zugesetzt wird.

## Revendications

1. Procédé permettant de fournir un produit à base de tomates, comprenant les étapes consistant à :
a) ajouter une méthyl estérase de pectine dans une pâte de tomates fractionnée à chaud ;
b) faire incuber la pâte de tomates chaude avec la méthyl estérase de pectine ;
c) inactiver la méthyl estérase de pectine ;
dans lequel l'étape b) est menée à bien dans des conditions telles que la consistance de la pâte de tomates est augmentée substantiellement sans prise en gel,
à la condition que la pâte de tomates ne soit pas soumise à un champs de cisaillement à haute pression.

2. Procédé selon la revendication 1, dans lequel la méthyl estérase de pectine est inactivée lorsque la pâte de tomates a une limite d'écoulement équivalant à moins de 400 Pascals à 12° Brix.

3. Procédé selon la revendication 1 ou la revendication 2, dans lequel la méthyl estérase de pectine est inactivée lorsque la pâte de tomates à une limite d'écoulement équivalant à plus de 50 Pascals à 12°C.

4. Procédé selon l'une quelconque des revendications précédentes, dans lequel la méthyl estérase de pectine est inactivée lorsque la pâte de tomates incubée à une valeur G' équivalant à 3.500 Pascals ou moins à 12° Brix.

5. Procédé selon l'une quelconque des revendications précédentes, dans lequel la méthyl estérase de pectine est inactivée lorsque la pâte de tomates incubée à une valeur G' équivalant à 1.500 Pascals ou plus à 12°Brix.

6. Procédé selon l'une quelconque des revendications précédentes, dans lequel l'extrait de méthyl estérase de pectine provient d'un légume, d'un fruit ou d'un mélange de ceux-ci.

7. Procédé selon la revendication 6, dans lequel l'extrait de méthyl estérase de pectine provient du groupe constitué des haricots verts, des haricots mange-tout, des pommes de terre, des choux fleurs, des cerises aigres, des tomates vertes, des poivrons verts, des oranges, des pommes, des bananes, des poires, des navets, des oignons, de l'ail et des mélanges de ceux-là.

8. Procédé selon la revendication 7, dans lequel l'extrait de méthyl estérase de pectine provient des tomates vertes.

9. Procédé selon la revendication 8, dans lequel une tomates vertes ou un morceau de celle-ci est stabilisée et est le matériau dont on extrait la méthyl estérase de pectine.

10. Procédé selon la revendication 9, dans lequel la tomates vertes ou un morceau de celle-ci est stabilisé par congélation et/ou séchage.

11. Procédé selon l'une des revendications précédentes, dans lequel l'étape b) comprend en outre le fait de cisailler la pâte de tomates pendant son incubation avec la méthyl estérase de pectine.

12. Procédé selon l'une quelconque des revendications précédentes, dans lequel de la pâte de tomates fractionnée à chaud et non traitée à la PME est ajoutée entre les étapes b) et c), ou après l'étape c).
